# EUROPEAN PATENT APPLICATION

(11) **EP 4 559 874 A1**
(43) Date of publication of application: **28.05.2025**
(21) Application number: 23843439.3
(22) Date of filing: 21.07.2023
(51) Int. Cl.: C01B 33/159, C01B 33/158

(54) **METHOD FOR MANUFACTURING HYDROPHOBIC SILICA AEROGEL BLANKET AND SILICA AEROGEL BLANKET**

(30) Priority: 22.07.2022 KR 20220091299
(71) Applicant: LG Chem, Ltd., Yeongdeungpo-gu Seoul 07336 (KR)
(72) Inventor: LEE, Kyu Reon, Daejeon 34122 (KR); KIM, Mi Ri, Daejeon 34122 (KR); OH, Myung Eun, Daejeon 34122 (KR); OH, Kyoung Shil, Daejeon 34122 (KR)
(74) Representative: Goddar, Heinz J.
(86) International application number: PCT/KR2023/010608
(87) International publication number: WO 2024/019593

(57) **Abstract**

The present invention relates to a method for producing a silica aerogel blanket having excellent surface modification efficiency and high hydrophobicity while not containing residual chlorine, and to a silica aerogel blanket produced thereby and not containing residual chlorine.

## Description

### TECHNICAL FIELD

This application claims the benefit of Korean Patent Application No. 10-2022-0091299, filed on July 22, 2022, in the Korean Intellectual Property Office, the disclosure of which is incorporated herein in its entirety by reference.

The present invention relates to a method for producing a silica aerogel blanket having excellent surface modification efficiency and high hydrophobicity while not containing residual chlorine, and to a silica aerogel blanket produced thereby and not containing residual chlorine.

### BACKGROUND ART

An aerogel is a super-porous, high specific surface area (≥500 m²/g) material having a porosity of about 90 % to 99.9% and a pore size in the range of 1 nm to 100 nm, and is a material having excellent properties of ultra-light weight, super thermal insulation, ultra-low dielectric, and the like. Accordingly, research on the development of aerogel materials as well as research on the practical use thereof as transparent insulation materials, environmentally friendly high temperature insulation materials, ultra-low dielectric thin films for highly integrated devices, catalysts and catalyst carriers, electrodes for super capacitors, and electrode materials for seawater desalination have been actively conducted.

The biggest advantage of an aerogel is that the aerogel has super-insulation properties exhibiting a thermal conductivity of 0.300 W/m·K or less, which is lower than that of an organic insulation material such as conventional Styrofoam. In addition, fire vulnerability and the generation of harmful gases in case of fire which are fatal weaknesses of an organic insulation material may be solved.

However, since the preparation process thereof is complex and the preparation cost thereof is high, aerogel is used only for extremely limited uses, despite having such excellent material properties. In addition, due to its high porosity, aerogel has very poor mechanical strength, so that there is a disadvantage in that aerogel is prone to break even by a minor impact. Therefore, in recent years, an aerogel blanket complexation technique has been studied to compensate for the above disadvantages of aerogel itself and enable processing in various forms.

An aerogel blanket is an aerogel material subjected to complexation and made in the form of a mattress or sheet, and has characteristics of being bent, folded, or cut due to the flexibility thereof. Therefore, the aerogel blanket may be applied to pipe insulation, clothing, or the like, and various industrial applications thereof are also possible. The aerogel blanket has flexibility since it is a composite composed of fiber and aerogel. The fiber serves to reinforce the flexibility and mechanical strength of the aerogel blanket, and the aerogel imparts thermal insulation properties due to its porosity. It is a key complexation technique of the aerogel blanket in that features of the fiber and features of the aerogel are complexed to strength the advantages of the fiber and the aerogel and compensate for the disadvantages thereof.

Such an aerogel blanket is a new material superior in heat resistance and thermal insulation to polystyrene foam or polyurethane foam, which is a conventional polymer insulation material, and is attracting attention as a high-tech material capable of solving energy saving and environmental problems to be unfolded in the future.

A silica aerogel blanket is produced by performing gelation by mixing a fiber with a silica sol obtained from water glass or an alkoxide-based precursor, followed by aging, surface modifying, and drying, wherein the surface modification is performed by adding an acid catalyst together with a hydrophobizing agent after the silica sol is impregnated into the fiber. At this time, the hydrophobizing agent is not miscible with water, and thus, has no reactivity with a wet gel, especially a hydrogel obtained by gelling water glass, so that a method of solvent substitution with an amphiphilic organic solvent such as ethanol has been used, or a method of using a trimethylchlorosilane (TMCS) hydrophobizing agent, thereby using HCl produced therefrom as a catalyst for a reaction has been used, but the solvent substitution with an amphiphilic organic solvent requires a long time for the solvent replacement, and a large amount of diluted organic solvent is produced, and the method of using a trimethylchlorosilane (TMCS) hydrophobizing agent produces HCl, causing Cl to remain in a final silica aerogel blanket.

Since the chlorine remaining in the silica aerogel blanket causes corrosion, it is necessary to develop a method for producing a silica aerogel blanket having high hydrophobicity by a method that has excellent surface modification efficiency but does not produce residual chlorine.

### [Prior Art Document]

### [Patent Document]

(Patent Document 1 US 5,789,075 B

### DISCLOSURE OF THE INVENTION

### TECHNICAL PROBLEM

An object of the present invention is to provide a method for producing a silica aerogel blanket, wherein the silica aerogel blanket has excellent surface modification efficiency, and does not contain residual chlorine, which excludes a corrosion problem which may be caused thereby when applying the silica aerogel blanket, thereby exhibiting excellent stability.

Another object of the present invention is to provide a silica aerogel blanket not containing chlorine.

### TECHNICAL SOLUTION

In order to achieve the above objects, the present invention provides a method for producing a silica aerogel blanket and the silica aerogel blanket.
[1] The present invention provides a method for producing a silica aerogel blanket, the method including 1) preparing a silica sol containing a water glass solution, 2) impregnating the silica sol into a substrate for a blanket, 3) preparing a wet gel by gelling the silica sol while the silica sol is impregnated into the substrate for a blanket, 4) immersing the wet gel in an acid mixture aqueous solution containing acetic acid and a nitric acid aqueous solution and surface modifying the wet gel with an alkyldisiloxane-based compound, and 5) drying the surface-modified wet gel, wherein after Step 4) above, an acetic acid concentration(w/w) is 30% to 90%, and a nitric acid concentration(w/w) is 5% to 10%.
[2] In [1] above, the present invention provides a method for producing a silica aerogel blanket, wherein the acetic acid concentration(w/w) is 35% to 80%.
[3] In [1] or [2] above, the present invention provides a method for producing a silica aerogel blanket, wherein the nitric acid concentration(w/w) is 5% to 10%.
[4] In any one of [1] to [3] above, the present invention provides a method for producing a silica aerogel blanket, wherein in Step 4) above, after the process of immersing the wet gel in the acid mixture aqueous solution is completed, the process of performing surface modification with the alkyldisiloxane-based compound is sequentially performed.
[5] In any one of [1] to [4] above, the present invention provides a method for producing a silica aerogel blanket, wherein in Step 4) above, the acid mixture aqueous solution and the alkyldisiloxane-based compound are sequentially introduced into the wet gel, or the acid mixture aqueous solution and the alkyldisiloxane-based compound are simultaneously introduced into the wet gel.
[6] In any one of [1] to [5] above, the present invention provides a method for producing a silica aerogel blanket, wherein in Step 4) above, the alkyldisiloxane-based compound is added in a volume ratio of 1 to 3 times based on the volume of the wet gel.
[7] In any one of [1] to [6] above, the present invention provides a method for producing a silica aerogel blanket, wherein the alkyldisiloxane-based compound is hexa(C₁₋₈ alkyl)disiloxane.
[8] In any one of [1] to [7] above, the present invention provides a method for producing a silica aerogel blanket, wherein the method for producing a silica aerogel blanket is performed under a chlorine-free condition.
[9] The present invention provides a silica aerogel blanket having a thermal conductivity of 12 mW/mK to 19 mW/mK, and a Cl content of 0 ppm to 500 ppm.
[10] In [9] above, the present invention provides a silica aerogel blanket, wherein the silica aerogel blanket has a Cl content of 0 ppm to 200 ppm.

### ADVANTAGEOUS EFFECTS

A method for producing a hydrophobic silica aerogel according to the present invention may manufacture a silica aerogel blanket having excellent surface modification efficiency, and high hydrophobicity while not containing residual chlorine, and thus, may be usefully applied in industries which require the same, particularly, industries which require a silica aerogel having high hydrophobicity or industries which require a silica aerogel having various ranges of hydrophobicity.

### MODE FOR CARRYING OUT THE INVENTION

Hereinafter, the present invention will be described in more detail to facilitate understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In general, a silica wet gel produced using water glass has a form in which pores are filled with water which is a solvent, and when the solvent is simply dried to be removed, the solvent in a liquid phase vaporizes into a gaseous phase and due to the high surface tension of water at a gas/liquid interface, it is likely that contraction and cracking occurs in the structure of the pores, thereby causing the reduction in surface area and change in the structure of the pores. Accordingly, in order to maintain the pore structure of the wet gel, it is necessary to substitute water having a high surface tension with an organic solvent having a relatively low surface tension, and there is a need for a technique for washing and drying a wet gel without causing the contraction thereof while maintaining the structure of the wet gel.

In addition, the dried silica aerogel maintains a low thermal conductivity rate just after being dried, but absorbs water in the air due to the hydrophilic properties of a silanol group (Si-OH) on the surface of silica, thereby having a disadvantage in that the thermal conductivity is gradually increased.

Therefore, in order to reduce the shrinkage and cracking of the pore structure due to the high surface tension of water at the gas/liquid interface when drying the silica wet gel, and to maintain low thermal conductivity by reducing the water absorption rate of the dried silica aerogel, it is necessary to modify the surface of the silica aerogel to be hydrophobic. Therefore, a method for modifying the surface of a silica aerogel to be hydrophobic using a surface modifier has been widely used.

In order to modify the wet gel to be hydrophobic, one or more surface modifiers selected from the group consisting of trimethylchlorosilane (TMCS), hexamethyldisilazane (HMDS), dimethyldiethoxysiloxane (DMDES), hexamethyldisiloxane (HMDSO), and trimethylethoxysilane (TMES) are typically used.

When hexamethyldisilazane (HMDS), dimethyldiethoxysiloxane (DMDES), hexamethyldisiloxane (HMDSO), or trimethylethoxysilane (TMES) is used among the above surface modifiers, the surface modifier does not mix with water, and thus, has no reactivity with a wet gel, especially a hydrogel obtained by gelling water glass, so that a process is performed wherein the hydrogel is first converted into an organic gel by the solvent substitution using an amphiphilic organic solvent such as ethanol, and then surface modified into a hydrophobic group by being reacted with the surface modifier. However, in the case of such a method, there is a disadvantage in that the solvent substitution requires a long time to convert the hydrogel into the organic gel, and a large amount of diluted organic solvent is produced.

In addition, when trimethylchlorosilane (TMCS) is used among the above surface modifiers, the surface modifier has reactivity with a wet gel or hydrogel, so that the solvent substitution process may be excluded, but there is a disadvantage in that all the remaining trimethylchlorosilane is converted into hexamethyldisiloxane (HMDSO) and become deactivated after the surface modification. Accordingly, in order to overcome the disadvantage of using the trimethylchlorosilane (TMCS) alone, a method has been developed wherein trimethylchlorosilane (TMCS) is mixed with hexamethyldisiloxane (HMDSO) at a small ratio and used to perform surface modification by converting hexamethyldisiloxane, which is an inactive species, to trimethylchlorosilane by using HCl produced from trimethylchlorosilane as a catalyst.

However, in both the method of using trimethylchlorosilane and the method of mixing trimethylchlorosilane with hexamethyldisiloxane (HMDSO), trimethylchlorosilane produces HCl after the surface modification reaction as shown in Reaction Equation 1, so that there is a problem in that some of chlorine remains in a silica aerogel blanket finally obtained, causing corrosion (corrosion under insulation (CUI)).

Meanwhile, instead of using the method of mixing trimethylchlorosilane with hexamethyldisiloxane (HMDSO), a method of separately introducing HCl, which is used as a catalyst, into hexamethyldisiloxane is also used, and in this method, surface modification is achieved, and at the same time, hexamethyldisiloxane fills pores, thereby converting a hydrogel into an organic gel, but similarly, some of the introduced chlorine remains in a silica aerogel blanket finally obtained.

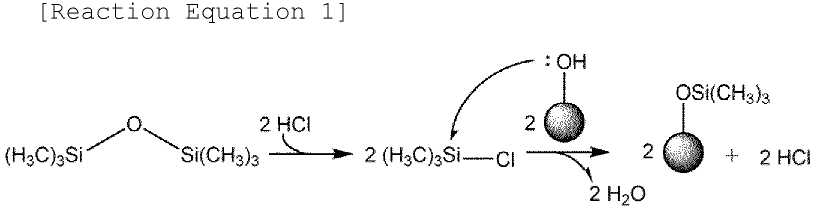

Meanwhile, the method for producing a silica aerogel blanket of the present invention does not use a compound containing chlorine (Cl) during the manufacturing process, so that a hydrophobic silica aerogel blanket produced does not contain residual chlorine.

The method for producing a silica aerogel blanket of the present invention is characterized by including 1) preparing a silica sol containing a water glass solution, 2) impregnating the silica sol into a substrate for a blanket, 3) preparing a wet gel by gelling the silica sol while the silica sol is impregnated into the substrate for a blanket, 4) immersing the wet gel in an acid mixture aqueous solution containing acetic acid and a nitric acid aqueous solution and surface modifying the wet gel with an alkyldisiloxane-based compound, and 5) drying the surface-modified wet gel, wherein after Step 4) above, an acetic acid concentration(w/w) is 30% to 90%, and an nitric acid concentration(w/w) is 5% to 10%.

The method for producing a silica aerogel blanket of the present invention uses acetic acid, which is an amphiphilic substance that can be dissolved in both water and an alkyldisiloxane-based compound used as a surface modifier, together with a nitric acid capable of promoting the protonation with respect to the alkyldisiloxane-based compound, wherein the acetic acid and the nitric acid are used in an amount that allows each of the concentration of the acetic acid and the concentration of the nitric acid [weight (W) /weight (W)] to satisfy a predetermined value after the surface modification of Step 4) above, and thus, may exhibit an excellent surface modification rate and allow a silica aerogel blanket finally produced not to contain residual chlorine.

### 1) Preparing silica sol containing water glass solution

The silica sol of Step 1) above may be prepared by mixing a water glass solution and an acid catalyst as a silica precursor.

In the silica sol, the acid catalyst may be included at a molar ratio of 1 to 3 with respect to water glass in the water glass solution.

The water glass solution may be a diluted solution obtained by adding and mixing distilled water to water glass, and the water glass may be sodium silicate (Na₂SiO₃), which is a alkali silicate salt obtained by melting silicon dioxide (SiO₂) and an alkali.

The water glass dispersion solution may contain 1 wt% to 13 wt% of silicon dioxide (SiO₂). If the silicon dioxide is contained in the water glass dispersion solution in a lower content than the above range, an aerogel may not be properly formed, and when the silicon dioxide is contained in a higher content than the above range, gelation may not be facilitated, or a specific surface area may be degraded.

Any one or more of organic acids and inorganic acids that do not contain chlorine in the compound molecular structure may be used as the acid catalyst to exclude chlorine from a silica aerogel blanket finally produced, and for example, the acid catalyst may be one or more selected from the group consisting of acetic acid, oxalic acid, nitric acid, sulfuric acid, and hydrofluoric acid, and specifically, nitric acid, acetic acid, or a mixture thereof may be used in consideration of an aqueous acid mixture solution used in the surface modification of Step 4) above.

The acid catalyst may be included in an amount which allows the pH of the silica sol to be 3 to 10. If the pH of the silica sol is out of the above range, the gelation of Step 3) above may not be facilitated, or a gelation rate may be too fast or slow, so that processability may be degraded.

### 2) Impregnating silica sol into substrate for blanket

Step 2) above is a step of impregnating the silica sol into a substrate for a blanket.

The substrate for a blanket according to an embodiment of the present invention may specifically be a porous substrate in terms of improving the thermal insulation properties of a silica aerogel blanket. When a porous substrate for a blanket is used, a silica sol easily penetrates into the substrate, thereby forming an aerogel uniformly inside the substrate for a blanket, so that a silica aerogel blanket produced may have excellent thermal insulation properties.

The substrate for a blanket which may be used according to an embodiment of the present invention may be a film, a sheet, a net, a fiber, a foam, a non-woven body, or a laminate body of two or more layers thereof. Also, according to the use of the substrate for a blanket, surface roughness may be formed or patterned on the surface thereof. More specifically, the substrate for a blanket may be a fiber capable of further improving thermal insulation performance by including a space or a void through which a silica aerogel may be easily inserted into the substrate for a blanket. Furthermore, the substrate for a blanket may preferably have low thermal conductivity.

Specifically, the substrate for a blanket may be polyamide, polybenzimidazole, polyaramid, an acryl resin, a phenol resin, polyester, polyetheretherketone (PEEK), polyolefin (e.g., polyethylene, polypropylene, a copolymer thereof, or the like), cellulose, carbon, cotton, wool, hemp, a non-woven fabric, glass fiber, a ceramic wool, or the like. More specifically, the substrate for a blanket in the present invention may be glass fiber.

In addition, according to an embodiment of the present invention, the impregnation may be performed by pouring a silica sol into a reaction vessel including the substrate for a blanket or by wetting the substrate for a blanket with a silica sol. At this time, in order to improve the bonding of the substrate for a blanket and the silica sol, the substrate for a blanket may be lightly pressed down to be sufficiently impregnated. Thereafter, the base material for a blanket may be pressed to a predetermined thickness with a constant pressure to remove an excess of the silica sol, thereby reducing drying time.

### 3) Preparing wet gel by gelling silica sol while silica sol is impregnated into substrate for blanket

Step 3) above is a step of producing a hydrophobic silica wet gel blanket, and the wet gel blanket may be produced by leaving the silica sol impregnated in the substrate for a blanket to stand to be gelled.

Here, the gelation may be a sol-gel reaction, and the "sol-gel reaction" may be forming a network structure from a silicon unit precursor material.

Here, the network structure may be a planar mesh structure in which specific polygons having one or more types of atomic arrangement are linked to each other, or a structure in which specific polyhedrons share their vertices, edges, faces, and the like with each other to form a three-dimensional skeletal structure.

The production method according to an embodiment of the present invention may further perform a step of aging the silica wet gel blanket produced after the gelation of Step 3) above.

The aging is not particularly limited, but may be performed, for example, by leaving to stand for 1 hour to 24 hours at room temperature (25 °C ) to a temperature of 90 °C .

The production method according to an embodiment of the present invention performs the aging after the silica wet gel blanket is produced, so that the network structure of a wet gel in the silica wet gel blanket may be further firmly formed, and accordingly, pore properties may be excellent.

### 4) Immersing wet gel in acid mixture aqueous solution containing acetic acid and nitric acid aqueous solution and surface modifying with alkyldisiloxane-based compound

In Step 4) above, a process is performed in which the wet gel is immersed in an acid mixture aqueous solution containing acetic acid and a nitric acid aqueous solution to be surface-modified with an alkyldisiloxane-based compound, thereby forming a hydrophobic silica wet gel blanket.

In one example of the present invention, a process of adding the acid mixture aqueous solution to the wet gel to immerse the wet gel in the acid mixture aqueous solution and then adding the alkyldisiloxane-based compound to the wet gel may be performed, and in another example of the present invention, a process of simultaneously adding the acid mixture aqueous solution and the alkyldisiloxane-based compound together to the wet gel may be performed.

Regardless of the time of addition of the acid mixture aqueous solution and the alkyldisiloxane-based compound added to the wet gel, the acid mixture aqueous solution containing water having a higher density than the alkyldisiloxane-based compound is positioned downward, so that layer separation of an alkyldisiloxane-based compound layer in an upper portion and an acid mixture aqueous solution layer in a lower portion is achieved. Even when the process of adding the acid mixture aqueous solution and the alkyldisiloxane-based compound together to the wet gel is performed, the hydrophobic alkyldisiloxane-based compound and the acid mixture aqueous solution containing water are separated into different layers, and the wet gel containing moisture is positioned in the acid mixture aqueous solution layer, so that immersion by the acid mixture aqueous solution is performed.

In the process of immersing the wet gel in the acid mixture aqueous solution, the acid mixture aqueous solution enters the wet gel by diffusion, so that the moisture present in the wet gel comes out of the wet gel and moves to the acid mixture aqueous solution layer. As described above, when the immersion by the acid mixture aqueous solution is completed, the acid concentration inside the wet gel and the acid concentration of the acid mixture aqueous solution outside the wet gel may be in equilibrium.

The acetic acid, which is an amphiphilic substance contained in the acid mixture aqueous solution, allows a trace amount of the alkyldisiloxane-based compound to be dissolved into the acid mixture aqueous solution at the interface between the alkyldisiloxane-based compound layer and the acid mixture aqueous solution layer, so that the surface modification of the wet gel is achieved by the alkyldisiloxane-based compound. In the process of achieving the surface modification of the wet gel, the aqueous solution filling the wet gel is substituted with the alkyldisiloxane-based compound, so that the wet gel is filled with the alkyldisiloxane-based compound, and the aqueous solution flows out of the wet gel and moves to the acid mixture aqueous solution layer. When the immersion process and the surface modification process are completed, the acid concentration inside the wet gel and the acid concentration outside the wet gel are in equilibrium.

The wet gel contains moisture, and thus, is initially positioned in the acid mixture aqueous solution layer, and as the wet gel is filled with the alkyldisiloxane-based compound as the surface modification is achieved, the wet gel gradually rises and moves to the alkyldisiloxane-based compound layer.

In an embodiment of the present invention, when hexamethyldisiloxane, for example, is used as the alkyldisiloxane-based compound in Step 4) above, a reaction as shown in Reaction Equation 2 below may be performed.

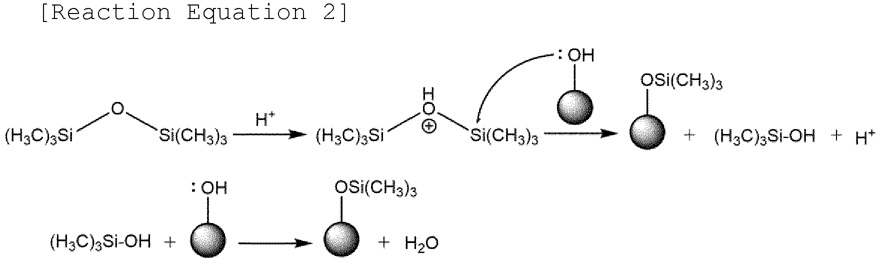

The acetic acid concentration (w/w) after Step 4) above means the concentration of acetic acid included in an acid mixture aqueous solution layer after Step 4) above, and may be represented by Equation 1 below. The concentration of acetic acid may be calculated by measuring the weight of water in the acid mixture aqueous solution layer after Step 4) above, and measuring the weight of the acetic acid in the acid mixture aqueous solution layer by gas chromatography (GC). The weight of the water in the acid mixture aqueous solution layer may be measured using a Karl Fischer moisture meter (Si Analytics Titro Line 7000). Acetic acid concentration (w/w) = Weight of acetic acid in acid mixture aqueous solution layer / (weight of acetic acid in acid mixture aqueous solution layer + total weight of water in acid mixture aqueous solution layer) × 100

In addition, the concentration (w/w) of nitric acid after Step 4) above means the concentration of nitric acid contained in an acid mixture aqueous solution layer after Step 4) above, and may be represented by Equation 2 below. The concentration of the nitric acid may be calculated by measuring the weight of water in the acid mixture aqueous solution layer after Step 4) above, and measuring the weight of the nitric acid in the acid mixture aqueous solution layer, and at this time, the amount of the nitric acid after Step 4) above is the same as the amount of the nitric acid added when preparing the acid mixture aqueous solution. Nitric acid concentration (w/w) = Weight of nitric acid added / (Weight of nitric acid added + Total weight of water in acid mixture aqueous solution layer) × 100

As described above, when the process of performing immersion in the acid mixture aqueous solution is completed, the acid concentration inside the wet gel and the acid concentration outside the wet gel are in equilibrium, so that when the acid concentration of the acid mixture aqueous solution layer after the immersion is measured, it is possible to identify the acid concentration inside the wet gel, and thus, may determine the acid concentration involved in the surface modification.

After Step 4) above, the water contained in the acid mixture aqueous solution layer may be water which remains after Step 4) above among water contained in the acetic acid aqueous solution and the nitric acid aqueous solution, water contained in the wet gel, and water derived from the hydrophilic hydrophobization reaction of the wet gel, and the total weight thereof may be the total weight of the water in the acid mixture aqueous solution layer.

Step 4) above may be performed by a method in which after the process of immersing the wet gel in the acid mixture aqueous solution is completed, the process of performing surface modification with the alkyldisiloxane-based compound is sequentially performed.

After Step 4) above, the acetic acid concentration (w/w) may be 30% to 90%, specifically 35% to 80%, 36% to 80%, and more specifically 36% to 78%. When acetic acid is used in an amount that allows the concentration of the acetic acid after Step 4) above to be 30% to 90%, the acetic acid may enable an effective contact between the hydrophilic wet gel and the hydrophobic alkyldisiloxane-based compound to allow a smooth surface modification reaction to be achieved. When the acetic acid concentration (w/w) is low, a reaction between the hydrophilic wet gel and the hydrophobic alkyldisiloxane-based compound may not be performed, so that the surface modification reaction may not be smoothly achieved. In addition, if the acetic acid concentration is excessive, more acetic acid than necessary should be introduced, so that economic feasibility may be degraded.

In addition, after Step 4) above, the nitric acid concentration (w/w) may be 5% to 10%, specifically 5% to 9%, 5% to 8%, 5.5% to 8%, 5.5% to 7.5%, and more specifically 5.5% to 7.3%. When the nitric acid concentration satisfies the above range, protonation with respect to the alkyldisiloxane-based compound is effectively promoted, so that an excellent surface modification reaction rate may be exhibited. When the nitric acid concentration is too low, the surface modification reaction rate is degraded, and the surface modification reaction by the alkyldisiloxane-based compound is not sufficiently achieved, so that the degree of hydrophobicity of the wet gel is degraded, and accordingly, the thermal conductivity of a silica aerogel blanket finally produced may increase. In addition, when the nitric acid concentration is too high, the oxidizing power of the nitric acid increases to form dangerous side reactants through a reaction with acetic acid, so that stability may be degraded.

The method for producing a silica aerogel blanket according to an embodiment of the present invention confirms whether the acetic acid concentration and the nitric acid concentration satisfy the aforementioned values after Step 4) above while ensuring that the acid mixture aqueous solution satisfies the weight ratio of the acetic acid and the nitric acid when immersing the wet gel in the acid mixture aqueous solution in Step 4) above, and thus, may achieve surface modification quickly and sufficiently effective for a wet gel, especially a hydrogel prepared by using a water glass solution.

The alkyldisiloxane-based compound may be introduced in a volume ratio of 1 to 3 times, specifically 1 to 2.5 times, and more specifically 1 to 2 times based on the volume of the wet gel.

The alkyldisiloxane-based compound needs to be introduced in a volume of 1 time or greater based on the volume of the wet gel in order to modify the wet gel and perform solvent substitution of the wet gel, and When the introduction amount of the alkyldisiloxane-based compound is increased, the size of the facility needs to be increased, so that the alkyldisiloxane-based compound may be introduced in the above value range based on the volume of the wet gel.

The alkyldisiloxane-based compound may be a hexaalkyldisiloxane-based compound, specifically hexa (C₁₋₈ alkyl)disiloxane, and more specifically, may be hexamethyldisiloxane.

The surface modification reaction may be performed at a temperature of 25 °C to 95 °C. In addition, a stirring process may be performed in the process of immersing the wet gel in the aqueous acid mixture solution and the process of surface modifying the wet gel with the alkoxydisiloxane-based compound.

At this time, the stirring is not particularly limited, but may be performed at a rate of, for example, 50 rpm to 700 rpm.

In addition, Step 4) according to an embodiment of the present invention may be performed for 2 to 24 hours, and may preferably be performed for 4 to 22 hours, or 8 to 20 hours in terms of improving the economic feasibility of the process while maintaining the effect of surface modification at an excellent level.

In the production method according to an embodiment of the present invention, when Step 4) above is performed by a method in which after the process of immersing the wet gel in the acid mixture aqueous solution is completed, the process of performing surface modification with the alkyldisiloxane-based compound is sequentially performed, the process of immersion in the acid mixture aqueous solution may be performed for 30 minutes to 4 hours, specifically 30 minutes to 3 hours, and more specifically 1 hour to 3 hours, and the process of performing surface modification with the alkyldisiloxane-based compound may be performed for 1 hour and 30 minutes to 20 hours, specifically 3 hours to 19 hours, and more specifically 6 hours to 18 hours.

### 5) Drying surface-modified wet gel

Step 5) above is a step of preparing a hydrophobic silica aerogel blanket by drying the hydrophobic silica wet gel blanket.

At this time, a washing step may be further performed before the drying. The washing is to obtain high purity hydrophobic silica aerogel blanket by removing impurities (sodium ions, non-reactants, by-products, and the like) generated during the reaction, wherein the washing may be performed by adding a non-polar organic solvent to the hydrophobic silica wet gel and stirring the mixture for 20 minutes to 1 hour, but is not limited thereto.

The drying may be performed by a method such as atmospheric drying or supercritical drying, but is not limited thereto. As an example, the atmospheric drying may be a method of drying at atmospheric pressure for 1 to 12 hours under a temperature condition of 100 °C to 190 °C, and the supercritical drying is a method performed using CO₂ in a supercritical state, wherein the atmospheric drying may have an advantage of being relatively simple and economical, and the supercritical drying may have an advantage of effectively removing a fluid inside the gel.

The method for producing the hydrophobic silica aerogel blanket according to an embodiment of the present invention may greatly improve the surface modification efficiency, and accordingly, may have physical properties such as excellent pore properties, as well as high hydrophobicity, and thus, may secure thermal insulation performance at an excellent level. Particularly, since the hydrophobization of an aerogel is performed under a chlorine-free (C1-free) condition in the method for producing a silica aerogel blanket according to an embodiment of the present invention, a silica aerogel blanket finally produced may not contain chlorine or contain a minimal amount of chlorine, so that the possibility of corrosion caused by the chlorine in a portion to which the silica aerogel blanket is applied may be excluded.

The silica aerogel blanket according to an embodiment of the present invention has a thermal conductivity of 12 mW/mK to 19 mW/mK, and a Cl content of 0 ppm to 500 ppm.

Specifically, the thermal conductivity of the silica aerogel blanket according to an embodiment of the present invention may be 12 mW/mK or greater, 13 mW/mK or greater, 14 mW/mK or greater, 15 mW/mK or greater, or 16 mW/mK or greater, and 19 mW/mK or less, 18.5 mW/mK or less, or 18.3 mW/mK or less.

The silica aerogel blanket according to an embodiment of the present invention does not contain Cl derived from an aerogel, but may include a small amount of Cl derived from the blanket substrate of the silica aerogel. Specifically, the Cl content of the silica aerogel blanket according to an embodiment of the present invention may be 0 ppm to 500 ppm, ppm to 400 ppm, 0 ppm to 300 ppm, or 0 ppm to 200 ppm.

The silica aerogel blanket produced according to the production method according to an embodiment of the present invention may be used in a variety of applications, including thermal insulation applications, including, for example, applications requiring thermal insulation at temperatures below 650 °C. For example, the silica aerogel blanket may be used as an insulation material for a pipe, such as a double-casing pipe, and for insulation of aircraft and parts thereof, insulation of buildings, insulation of spacecraft, insulation of automobiles, insulation of clothing, insulation of shoes, and the like. The aerogel blanket may be used in the same manner as in a case in which an aerogel mat or a plurality of aerogels are used.

Hereinafter, the present invention will be described in more detail with reference to Examples and Experimental Examples. However, the following Examples and Experimental Examples are merely illustrative of the present invention, and are not intended to limit the scope of the present invention.

### Example 1

33.8 g of water glass was diluted in 108.1 g of water to prepare a water glass solution, and 7.8 g of acetic acid (≥97%) was added thereto to prepare a silica sol. The silica sol was impregnated into a glass fiber and then left to stand for 10 minutes to obtain a glass fiber composite impregnated with a wet gel.

An acid mixture aqueous solution prepared by mixing 140 g of acetic acid(≥97%) and 15 g of a nitric acid aqueous solution of 70%(w/w) was poured to the glass fiber impregnated with the wet gel to immerse the glass fiber in the acid mixture aqueous solution in an oven at 60 °C for 2 hours while maintaining the temperature and then 160 g of hexamethyldisiloxane (HMDSO) was added thereto to perform a surface modification reaction in an oven at 75 °C for 16 hours while maintaining the temperature.

The produced hydrophobic silica wet gel blanket was recovered and then completely dried in a forced circulation dryer at 150 °C for 4 hours to manufacture a hydrophobic silica aerogel blanket.

### Example 2

A hydrophobic silica aerogel blanket was produced in the same manner as in Example 1, except that when preparing the acid mixture aqueous solution in Example 1 above, the content of the acetic acid(≥97%) was changed to 185 g, and a dilute nitric acid aqueous solution prepared by mixing 20 g of a nitric acid aqueous solution of 70%(w/w) with 95 g of water was used instead of the nitric acid aqueous solution of 70%(w/w%).

### Example 3

A hydrophobic silica aerogel blanket was produced in the same manner as in Example 1, except that when preparing the acid mixture aqueous solution in Example 1 above, the content of the acetic acid(≥97%) was changed to 280 g, and a dilute nitric acid aqueous solution prepared by mixing 30 g of a nitric acid aqueous solution of 70%(w/w) with 142 g of water was used instead of the nitric acid aqueous solution of 70%(w/w%).

### Example 4

A hydrophobic silica aerogel blanket was produced in the same manner as in Example 1, except that when preparing the acid mixture aqueous solution in Example 1 above, the content of the acetic acid(≥97%) was changed to 80 g.

### Example 5

A hydrophobic silica aerogel blanket was produced in the same manner as in Example 1, except that when preparing the acid mixture aqueous solution in Example 1 above, the content of the acetic acid(≥97%) was changed to 500 g.

### Comparative Example 1

A hydrophobic silica aerogel blanket was produced in the same manner as in Example 1, except that in Example 1 above, 140 g of hydrochloric acid of 35 wt% was only used instead of the acid mixture aqueous solution in which the acetic acid and the nitric acid aqueous solution was mixed.

### Comparative Example 2

A hydrophobic silica aerogel blanket was produced in the same manner as in Example 1, except that in Example 1 above, 140 g of acetic acid(≥97%) was only used instead of the acid mixture aqueous solution in which the acetic acid and the nitric acid aqueous solution were mixed.

### Comparative Example 3

A hydrophobic silica aerogel blanket was produced in the same manner as in Example 1, except that in Example 1 above, 140 g of a nitric acid aqueous solution of 70%(w/w) was only used instead of the acid mixture aqueous solution in which the acetic acid and the nitric acid aqueous solution were mixed.

### Comparative Example 4

A hydrophobic silica aerogel blanket was produced in the same manner as in Example 1, except that when preparing the acid mixture aqueous solution in Example 1 above, a dilute nitric acid aqueous solution prepared by mixing 15 g of a nitric acid aqueous solution of 70%(w/w) with 71.3 g of water was used together with 140 g of acetic acid(≥97%) instead of the nitric acid aqueous solution of 70%(w/w%).

### Comparative Example 5

A hydrophobic silica aerogel blanket was produced in the same manner as in Example 1, except that when preparing the acid mixture aqueous solution in Example 1 above, a dilute nitric acid aqueous solution prepared by mixing 20 g of a nitric acid aqueous solution of 70%(w/w) with 100 g of water was used together with 70 g of acetic acid (≥97%) instead of the nitric acid aqueous solution of 70%(w/w%).

### Comparative Example 6

A hydrophobic silica aerogel blanket was produced in the same manner as in Example 1, except that when preparing the acid mixture aqueous solution in Example 1 above, the amount of the nitric acid aqueous solution of 70%(w/w) used was changed to 30 g.

The amounts of components added during each surface modification reaction in Examples 1 to 5 and Comparative Examples 1 to 6 above are shown in Table 1 below.

**[Table 1]**

| Classification | Nitric acid 70% (w/w) (g) | Acetic acid (g) | Water (g) |
|---|---|---|---|
| Example 1 | 15 | 140 | 0 |
| Example 2 | 20 | 185 | 95 |
| Example 3 | 30 | 280 | 142 |
| Example 4 | 15 | 80 | 0 |
| Example 5 | 15 | 500 | 0 |
| Comparative Example 1 | HCl 140 g | | 0 |
| Comparative Example 2 | 0 | 140 | 0 |
| Comparative Example 3 | 140 | 0 | 0 |
| Comparative Example 4 | 15 | 140 | 71.3 |
| Comparative Example 5 | 20 | 70 | 100 |
| Comparative Example 6 | 30 | 140 | 0 |

### Experimental Examples

### 1) Acetic acid concentration after immersion

In each of Examples 1 to 5 and Comparative Examples 1 to 6, the weight of the water in the acid mixture aqueous solution after the acid immersion was measured using a Karl Fischer moisture meter (Si Analytics Titro Line 7000).

The amount of the acetic acid in the acid mixture aqueous solution after the acid immersion was obtained using gaschromatography (GC) analysis.
- Column: AT-1000
- Gas flow rate: Column(He) 4 mL/min
- Oven temperature: Initial Value & Time 40°C, 5 minutes
- Injector temperature: 250 °C
- Detector temperature: 270 °C Acetic acid concentration after acid immersion = Weight of acetic acid / (Weight of acetic acid + Weight of water × 100

### 2) Nitric acid concentration after acid immersion

In each of Examples 1 to 5 and Comparative Examples 1 to 6, the weight of the water in the acid mixture aqueous solution after the acid immersion was measured using a Karl Fischer moisture meter (Si Analytics Titro Line 7000).

Since the amount of the nitric acid in the acid mixture aqueous solution after the acid immersion is the same as the amount of the nitric acid initially introduced, the nitric acid concentration was calculated by taking the weight of the initially introduced nitric acid as the weight of the nitric acid in the acid mixture aqueous solution. Nitric acid concentration after acid immersion = Weight of nitric acid introduced / (Weight of nitric acid introduced + Weight of water)

### 3) Measurement of thermal conductivity (mW/mK)

The room-temperature (about 23 °C) thermal conductivity of the silica aerogel blanket produced in each of Examples 1 to 5 and Comparative Examples 1 to 6 was measured using HFM 436 equipment of NETZSCH Co.

### 4) Measurement of Cl residual amount

The amount of residual Cl was measured for the silica aerogel blanket produced in each of Examples 1 to 5 and Comparative Examples 1 to 6 by using a combustion ion chromatography (IC) system (AQF-2100H, ICS-3000, Thermo Fisher Scientific Co.).

**[Table 2]**

| Classification | Acetic acid concentration after immersion (%) | Nitric acid concentration after immersion (%) | Thermal conductivity (mW/mK) |
|---|---|---|---|
| Example 1 | 50.5 | 7.1 | 16.7 |
| Example 2 | 44.0 | 5.6 | 17.1 |
| Example 3 | 49.3 | 6.8 | 17.1 |
| Example 4 | 37.1 | 7.2 | 16.9 |
| Example 5 | 77.1 | 6.6 | 18.2 |
| Comparative Example 1 | - | - | 17.5 (Cl 5000 ppm or greater detected) |
| Comparative Example 2 | 51.3 | 0 | 20.5 |
| Comparative Example 3 | 0 | 36.5 | 28.8 |
| Comparative Example 4 | 40.2 | 4.8 | 19.1 |
| Comparative Example 5 | 22.8 | 5.6 | 24.5 |
| Comparative Example 6 | 49.7 | 12.9 | Unable to produce due to side reaction between nitric acid and acetic acid |

Examples 1 to 5 produced silica aerogel blankets by a production method in which an acid mixture aqueous solution including acetic acid and a nitric acid aqueous solution was used, and after the acid immersion, the acetic acid concentration(w/w) of the acid mixture aqueous solution layer satisfied 30% to 90%, and the nitric acid concentration (w/w) therein satisfied 5 to 10%, and it was confirmed that silica aerogel blankets having low thermal conductivity were produced.

Comparative Example 1 used hydrochloric acid (HCl) as acid, wherein Cl having 5,000 ppm or greater was detected in the produced silica aerogel blanket, and exhibited a relatively slightly higher value of thermal conductivity than Examples 1 to 3.

Comparative Example 2 is an example of using only acetic acid without using nitric acid, and it was confirmed that the thermal conductivity increased due to a slow surface modification rate, resulting in degradation in physical properties. In addition, Comparative Example 3 is an example of using only nitric acid without using acetic acid, wherein surface modification was not performed at all since the acetic acid, which is an amphiphilic solvent, was not used, so that the reaction between hexamethyldisiloxane and the wet gel did not occur, and thus, exhibited high thermal conductivity.

In addition, Comparative Example 4 is an example in which the nitric acid concentration of the acid mixture aqueous solution layer is less than 5% after the acid immersion, and Comparative Example 5 is an example in which the acetic acid concentration of the acid mixture aqueous solution layer is less than 30% after the acid immersion, wherein the nitric acid and the acetic acid were each used in an amount less than an appropriate amount in the acid mixture aqueous solution, so that it was confirmed that the produced silica aerogel blanket exhibited a high value of thermal conductivity, and had degradation in physical properties.

Meanwhile, Comparative Example 6 is an example in which although acetic acid and nitric acid were used together, the nitric acid concentration in the acid mixture aqueous solution layer after the acid immersion was 10% or greater, wherein the amount of nitric acid used was greater than an appropriate amount, causing a side reaction between the acetic acid and the nitric acid, so that a reaction for surface-modifying the wet gel did not occur.

## Claims

1. A method for producing a silica aerogel blanket, the method comprising:
1) preparing a silica sol containing a water glass solution;
2) impregnating the silica sol into a substrate for a blanket;
3) preparing a wet gel by gelling the silica sol while the silica sol is impregnated into the substrate for a blanket;
4) immersing the wet gel in an acid mixture aqueous solution containing acetic acid and a nitric acid aqueous solution and surface modifying the wet gel with an alkyldisiloxane-based compound; and
5) drying the surface-modified wet gel,
wherein after Step 4) above, an acetic acid concentration(w/w) is 30% to 90%, and a nitric acid concentration(w/w) is 5% to 10%.

2. The method for producing a silica aerogel blanket of claim 1, wherein the acetic acid concentration(w/w%) is 35% to 80%.

3. The method for producing a silica aerogel blanket of claim 1, wherein the nitric acid concentration (w/w%) is 5.5% to 8%.

4. The method for producing a silica aerogel blanket of claim 1, wherein in Step 4) above, after the process of immersing the wet gel in the acid mixture aqueous solution is completed, the process of performing surface modification with the alkyldisiloxane-based compound is sequentially performed.

5. The method for producing a silica aerogel blanket of claim 1, wherein in Step 4) above, the acid mixture aqueous solution and the alkyldisiloxane-based compound are sequentially introduced into the wet gel, or the acid mixture aqueous solution and the alkyldisiloxane-based compound are simultaneously introduced into the wet gel.

6. The method for producing a silica aerogel blanket of claim 1, wherein in Step 4) above, the alkyldisiloxane-based compound is added in a volume ratio of 1 to 3 times based on the volume of the wet gel.

7. The method for producing a silica aerogel blanket of claim 1, wherein the alkyldisiloxane-based compound is hexa (C₁₋₈ alkyl) disiloxane.

8. The method for producing a silica aerogel blanket of claim 1, wherein the method for producing a silica aerogel blanket is performed under a chlorine-free condition.

9. A silica aerogel blanket having a thermal conductivity of 12 mW/mK to 19 mW/mK, and a Cl content of 0 ppm to 500 ppm.

10. The silica aerogel blanket of claim 9, wherein the silica aerogel blanket has a Cl content of 0 ppm to 200 ppm.
